# EUROPEAN PATENT SPECIFICATION

(11) **EP 2 392 801 B1**
(45) Date of publication and mention of the grant of the patent: **06.01.2016**
(21) Application number: 10165088.5
(22) Date of filing: 07.06.2010
(51) Int. Cl.: F02D 41/00

(54) **Method and Device for Detecting the Cetane Number**
Verfahren und Vorrichtung zum Erkennen einer Cetanzahl
Procédé et dispositif pour détecter le nombre de cétane

(43) Date of publication of application: 07.12.2011
(73) Proprietor: Ford Global Technologies, LLC, Dearborn, MI 48126 (US)
(72) Inventor: Petrovic, Simon, 6227TV, Maastricht (NL); Tumelaire, Charles, 52076, Aachen (DE)
(74) Representative: Drömer, Hans-Carsten

(56) References cited:
- EP-A1- 1 900 926
- EP-A1- 2 031 232
- WO-A1-2009/063298

## Description

The present invention relates to a method and a device for detecting the cetane number of the fuel used by a direct-injection diesel engine, the diesel engine being equipped with a turbocharger.

The cetane number is a measure of the combustion quality of diesel fuel, in particular of the ignition delay, which is the time period between the start of injection and the start of combustion of the fuel. The cetane number thus needs to be taken into account in an engine control system, in order to determine optimal fuel injection timing and quantity as well as optimal exhaust gas recirculation parameters. Failure to do so will result in increased noise and exhaust emissions.

In many regions of the world, however, the cetane number (CN) of diesel fuel varies, depending on supplier, quality, or on the particular state where the fuel is supplied. In North America, e.g., the cetane number varies across the different states from 40 to 55. The cetane number variability thus is a significant uncertainty factor for the engine control system. Therefore, methods for cetane number measurement have been developed.

Known methods comprise the use of knock sensors mounted on the engine to detect the combustion signal. However, such sensors increase overall cost, and it may not always be possible to find a suitable location for the sensors. An alternative method relies on the variation of the engine's instantaneous acceleration or torque when the start of injection is varied. The latter method does not necessarily require an additional sensor, but suffers from insufficient reliability.

According to EP 2 032 232 A1, the cetane number is detected by measuring the amplitude of angular velocity variations of the crankshaft of the engine, employing an angular velocity sensor. This amplitude is related the cetane number. Depending on the cetane number thus determined, various parameters such as fuel injection timing and quantity are calculated. Additional sensor signals may be employed for controlling the corrections made, such as exhaust temperature, oxygen concentration, and turbocharger rotation speed. Due to the necessity of detecting the minute variations of the angular velocity of the crankshaft during rotation, a high-performance angular velocity sensor is required, thus increasing the total system cost.

It is therefore an object of the present invention to provide a method and a device for detecting the cetane number of the fuel used by a diesel engine, the diesel engine being equipped with a turbocharger, avoiding the drawbacks of the previous solutions mentioned.

This object is met by a method according to claim 1 and a device according to claim 8.

According to the invention, it has been noted that the rotation speed of a turbocharger of a turbocharged diesel engine can be indicative of the cetane number of the fuel burned by the diesel engine. More particularly, it has been found that the dependency of the turbocharger speed on the timing of the fuel injection is different for fuels of different cetane numbers.

In the inventive method, the cetane number of the fuel used by a direct-injection diesel engine, the diesel engine being equipped with a turbocharger, is determined by operating the diesel engine with at least two different delays of the start of fuel injection with respect to a nominal start of fuel injection. Thus, e.g., the engine may be operated in a first mode at the nominal timing of fuel injection, and thereafter in a second mode at a delayed timing, the start of injection being delayed with respect to the nominal start of injection. In particular, the main injection may be delayed by a variable delay, but the pilot or other injections may be delayed as well.

According to the invention, the turbocharger speed is measured at the at least two different delays, thus providing a dependency of the turbocharger speed on the start of injection delay. The turbocharger speed measured by a turbocharger speed sensor is the rotation speed of the turbine of the turbocharger or at least directly depends on the turbine speed. Turbochargers are becoming more frequently equipped with speed sensors for overspeed protection, air path control, back-pressure or mass-flow estimation and/or for other purposes, such as for measuring the leakage speed in particular turbocharger configurations. In such cases, the turbocharger speed sensor signal is available in the engine control electronics, providing information on the turbocharger speed depending on the start of injection delay.

The variation of the turbocharger speed with the start of injection delay depends on the cetane number and thus permits determination of the cetane number. Such determination may be achieved, e.g., by comparing the turbocharger speed measured or the deviation of the measured turbocharger speed from a nominal value with preset values for a variety of cetane numbers stored in a lookup table, or by a calculation performed on the basis of a pre-stored algorithm that relates the cetane number to the turbocharger speed or speed deviation measured.

Thus, the cetane number can be determined in a simple, cost-effective and reliable way, based on the signal of the turbocharger speed sensor, which is available in most engine control systems.

According to a preferred embodiment of the invention, the diesel engine is operated in an intermediate engine speed range when applying the at least two different delays. A preferable range of engine speeds may be, e.g., from 1000 to 3000 rpm (rotations per minute), and more preferably from 1500 to 2000 rpm. According to this aspect of the invention, it has been found that the most significant dependence of turbocharger speed on cetane number occurs at intermediate engine speeds, permitting most reliable determination of the cetane number.

According to a further preferred embodiment of the invention, the at least two different delay times depend on the engine speed and/or on the engine load. In this way, the fact can be accounted for that depending on engine speed, the dependency of the turbocharger speed can be most prominent at different start of injection delays. Thus, e.g., a short delay with respect to the nominal timing may be sufficient to provide a significant effect of the cetane number on the turbocharger speed at a given engine speed, whereas at a different engine speed, a longer delay may be necessary for a significant cetane-number dependent effect to show up. The delays that are most preferable for the detection of the cetane number can be determined in a calibration run. The delay times to be chosen may also depend on other engine parameters, such as, in particular, the engine load. By accounting for engine speed and/or load in choosing the delay times, a most reliable determination of the cetane number can be achieved.

In an advantageous embodiment, when using the at least two different delays, the diesel engine is operated at a substantially constant engine speed and/or load. In order to achieve a constant engine speed and/or load, the normal operation of the engine may be interrupted for a short period of time. The period of time may be short enough so that the driver of a vehicle equipped with the engine may not realize the interruption. In this way, a simple and reliable determination of the cetane number can be performed.

According to a further preferred embodiment, the method for detecting the cetane number is executed during dynamic operating conditions. In particular, if possible, a period of constant operating conditions such as constant engine speed and/or load can be selected during the normal operation of the engine. Alternatively, a variation of engine parameters during the use of the at least two different start of injection delays may be permissible and can be accounted for by a pre-stored map of engine parameters, turbocharger speeds and cetane numbers. In this way, the cetane number can be determined at any time without interrupting the normal operation of the engine.

The method for detecting the cetane number may be started manually by the driver of a vehicle equipped with the diesel engine or the operator of the engine. Advantageously, the inventive method can be performed automatically at regular intervals during dynamic operation of the engine, or when the conditions are suitable for performing the method for detection of the cetane number. In this way, the cetane number of the fuel can be determined regularly, such that the actual cetane number is available at any time.

According to a further preferred embodiment, the method is automatically executed after re-fuelling, as indicated, e. g., by a filling sensor. In this way, the cetane number can be determined when a change in cetane number may occur. The method can be started immediately after re-fuelling, or some time thereafter, e. g. after some fuel consumption, thus accounting for mixing with remaining fuel and for filling the fuel system with the re-filled fuel.

An inventive device for detecting the cetane number of the fuel used by a direct-injection diesel engine, the diesel engine being equipped with a turbocharger, comprises a turbocharger speed sensor and an electronic engine control unit programmed for executing the inventive method. Modern direct-injection engines comprise an electronic engine management system acquiring data on current engine parameters and steering fuel injection timing and quantities. The inventive method therefore can be performed by an electronic control unit without the need for further sensors or actuators. In particular, the result of the detection of the cetane number can be displayed to the driver or operator by a display means, and/or can be employed automatically for an optimized engine management adjusted to the cetane number of the fuel currently used.

A method for operating a diesel engine comprises the inventive method for detecting the cetane number of the fuel used and further comprises adjusting at least one of pilot injection timing, pilot injection quantity, main injection timing and/or exhaust gas recirculation rate according to the cetane number determined. In this way, an optimal engine management is achieved for improving performance and reducing noise and other emissions, regardless of the cetane number of the fuel currently used. The inventive method for detecting the cetane number may be combined with other methods in order to increase reliability and accuracy.

Further aspects of the present invention will be apparent from the figure and from the description of a particular embodiment that follows.

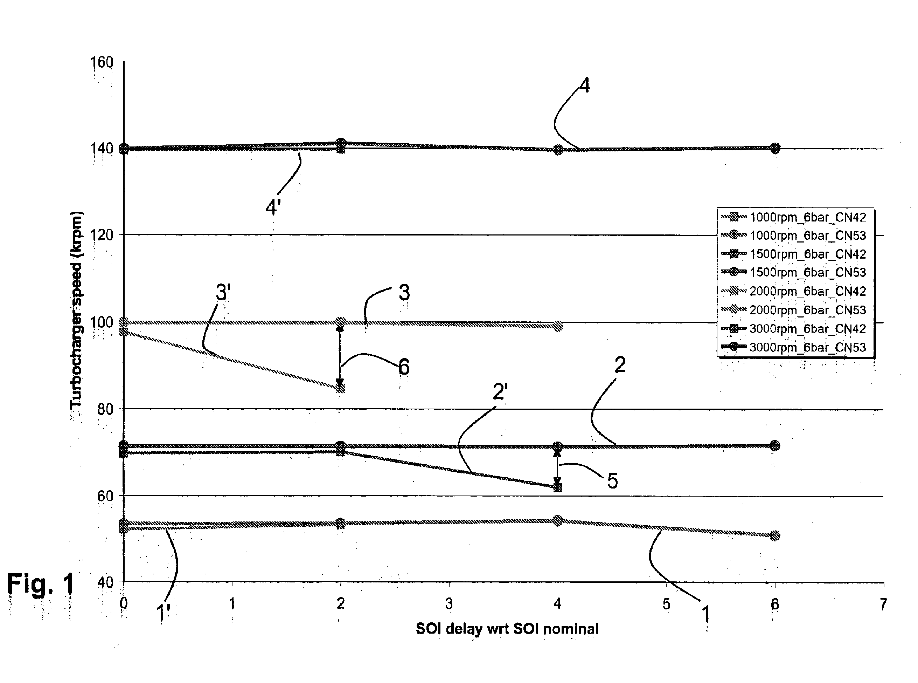

Fig. 1 shows a graphical representation of measurements of the turbocharger speed depending on the delay of the start of injection with respect to a nominal start of injection at various engine speeds for an exemplary diesel engine comprising direct fuel injection, turbocharger and exhaust gas recirculation.

As shown in Fig. 1, in an intermediate range of engine speeds, there is a significant, measurable difference in turbocharger speeds, depending on whether high- or low-cetane fuel is used. The filled circles indicate measurements with diesel fuel with cetane number (CN) 53, whereas the filled squares are measurements with CN 42 diesel fuel. Each of the four pairs of curves shown in Fig. 1 is representative of a given engine speed, indicating the turbocharger speed as measured by the turbocharger speed sensor for a variety of start of injection delays.

In Fig. 1, curves 1 and 1' each represent an engine speed of 1000 rpm (rotations per minute), while curves 4 and 4' refer to an engine speed of 3000 rpm each. As can be seen in Fig. 1, there is no significant CN-dependent variation in turbocharger speed at those engine speeds.

Curves 2 and 2' each refer to an engine speed of 1500 rpm, and curves 3 and 3' each represent an engine speed of 2000 rpm. In each case, the turbocharger speed depends considerably on the cetane number of the fuel used, as indicated by curve 2' for CN 42 fuel significantly deviating from curve 2 for CN 53 fuel, and by curve 3' (CN 42) deviating from curve 3 (CN 43). The delay time at which the most significant deviation of turbocharger speeds occurs, as indicated by the arrows 5 and 6, depends on the engine speed.

In the example shown, the cetane number is determined by operating the diesel engine at a constant engine speed as measured by an engine speed sensor, and measuring the turbocharger speed by a turbocharger speed sensor. In a first mode of operation the engine is operated with nominal injection timing, i. e. the delay of the start of fuel injection is 0. Thus, a first or nominal value of the turbocharger speed is measured. In a second operation mode, the start of fuel injection is delayed with respect to the nominal timing, in particular the start of the main fuel injection is delayed. The period of time delay chosen can be preset according to a calibration performed for the individual engine or the type of engine, the delay depending on the engine speed. The preset value of the delay is chosen to provide a significant difference in turbocharger speed with different cetane numbers. Thus, a second value of the turbocharger speed is measured. The difference between the first and second values is indicative of the cetane number of the fuel used by the diesel engine. In the example given, the difference is about 0 for fuel with a cetane number of 53, while for fuel with a cetane number of 42 the difference corresponds to about 10% of the first turbocharger speed value at an engine speed of 1500 rpm, and to about 15% at an engine speed of 2000 rpm. Such variations are reliably detectable, permitting determination of the cetane number with sufficient accuracy. The engine may be operated in further operating modes employing further delays, in order to measure further turbocharger speed values, thereby increasing the accuracy of cetane number detection.

The delay of the start of fuel injection in the second operation mode need not be preset. Instead, the delay may be varied until a deviation of the turbocharger speed from the first value occurs that is sufficient for detecting the cetane number of the fuel. In the example described, with 2000 rpm only one delay other than 0 needs to be established in order to detect a cetane number of 42, and with 1500 rpm two delay values other than 0 have to be employed for detecting CN 42 fuel. Thus, the cetane number can be determined in a most flexible way.

## Claims

1. Method for detecting the cetane number of the fuel used by a direct-injection diesel engine equipped with a turbocharger, comprising the steps of operating the diesel engine with at least two different delays of the start of injection with respect to a nominal start of injection, measuring the turbocharger speed depending on the delay, and determining the cetane number from the variation of the turbocharger speed with the delay.

2. Method according to claim 1,
**characterized in that**
the diesel engine is operated in an intermediate engine speed range, preferably in the range from 1000 to 3000 rotations per minute, more preferably in the range from 1500 to 2000 rotations per minute.

3. Method according to claims 1 or 2,
**characterized in that**
the at least two different delay times depend on the engine speed and/or load.

4. Method according to any one of the preceding claims,
**characterized in that**
the diesel engine is operated at a substantially constant engine speed and/or load.

5. Method according to any one of the preceding claims,
**characterized in that**
the method is executed during dynamic operating conditions.

6. Method according to any one of the preceding claims,
**characterized in that**
the method is automatically executed at regular intervals.

7. Method according to any one of the preceding claims,
**characterized in that**
the method is automatically executed after re-fuelling.

8. Device for detecting the cetane number of the fuel used by a direct-injection diesel engine equipped with a turbocharger, comprising a turbocharger speed sensor and an engine control unit programmed for performing the method according to any one of the preceding claims.

## Patentansprüche

1. Verfahren zum Detektieren der Cetanzahl des Kraftstoffs, der von einer Direkteinspritzungs-Dieselkraftmaschine verwendet wird, die mit einem Turbolader ausgestattet ist, das die Schritte des Betreibens der Dieselkraftmaschine mit mindestens zwei verschiedenen Verzögerungen des Einspritzungsbeginns mit Bezug auf einen nominellen Beginn der Einspritzung, des Messens der Turboladerdrehzahl in Abhängigkeit von der Verzögerung und des Bestimmens der Cetanzahl aus der Variation der Turboladerdrehzahl mit der Verzögerung umfasst.

2. Verfahren nach Anspruch 1,
**dadurch gekennzeichnet, dass**
die Dieselkraftmaschine in einem mittleren Drehzahlbereich betrieben wird, bevorzugt in dem Bereich zwischen 1000 und 3000 Umdrehungen pro Minute, noch bevorzugter in dem Bereich zwischen 1500 und 2000 Umdrehungen pro Minute.

3. Verfahren nach Anspruch 1 oder 2,
**dadurch gekennzeichnet, dass**
die mindestens zwei verschiedenen Verzögerungszeiten von der Kraftmaschinendrehzahl und/oder Kraftmaschinenlast abhängen.

4. Verfahren nach einem der vorherigen Ansprüche,
**dadurch gekennzeichnet, dass**
die Dieselkraftmaschine bei einer im Wesentlichen konstanten Kraftmaschinendrehzahl und/oder Kraftmaschinenlast betrieben wird.

5. Verfahren nach einem der vorherigen Ansprüche,
**dadurch gekennzeichnet, dass**
das Verfahren während dynamischer Betriebsbedingungen ausgeführt wird.

6. Verfahren nach einem der vorhergehenden Ansprüche,
**dadurch gekennzeichnet, dass**
das Verfahren automatisch in regelmäßigen Abständen ausgeführt wird.

7. Verfahren nach einem der vorhergehenden Ansprüche,
**dadurch gekennzeichnet, dass**
das Verfahren automatisch nach dem Betanken ausgeführt wird.

8. Vorrichtung zum Detektieren der Cetanzahl des Kraftstoffs, der von einer Direkteinspritzungs-Dieselkraftmaschine verwendet wird, die mit einem Turbolader ausgestattet ist, die einen Turboladerdrehzahlsensor und eine Kraftmaschinen-Steuerungseinheit, die dazu programmiert ist, das Verfahren nach einem der vorhergehenden Ansprüche auszuführen, umfasst.

## Revendications

1. Procédé de détection de l'indice de cétane du carburant utilisé dans un moteur diesel à injection directe équipé d'un turbocompresseur, le procédé comportant les étapes qui consistent à faire fonctionner le moteur diesel avec au moins deux retards différents du début de l'injection par rapport à un début nominal de l'injection, à déterminer la vitesse du turbocompresseur en fonction du retard et à déterminer l'indice de cétane à partir de la variation de la vitesse du turbocompresseur en fonction du retard.

2. Procédé selon la revendication 1, **caractérisé en ce que** le moteur diesel est utilisé dans une plage intermédiaire de vitesses du moteur, de préférence dans la plage de 1000 à 3000 tours par minute et de façon plus préférable dans la plage de 1500 à 2000 tours par minute.

3. Procédé selon les revendications 1 ou 2, **caractérisé en ce que** les deux ou plusieurs durées de retard dépendent de la vitesse du moteur et/ou de la charge.

4. Procédé selon l'une quelconque des revendications précédentes, **caractérisé en ce que** le moteur diesel est utilisé à une vitesse et/ou à une charge essentiellement constantes du moteur.

5. Procédé selon l'une quelconque des revendications précédentes, **caractérisé en ce que** le procédé est exécuté dans des conditions de fonctionnement dynamiques.

6. Procédé selon l'une quelconque des revendications précédentes, **caractérisé en ce que** le procédé est exécuté automatiquement à des intervalles réguliers.

7. Procédé selon l'une quelconque des revendications précédentes, **caractérisé en ce que** le procédé est exécuté après avoir réalisé le plein de carburant.

8. Dispositif de détection de l'indice de cétane du carburant utilisé par un moteur à injection directe équipé d'un turbocompresseur, comprenant un capteur de vitesse du turbocompresseur et une unité de contrôle du moteur programmée en vue d'exécuter le procédé selon l'une quelconque des revendications précédentes.
